# EUROPÄISCHE PATENTSCHRIFT

(11) **EP 3 689 131 B1**
(45) Veröffentlichungstag und Bekanntmachung des Hinweises auf die Patenterteilung: **09.11.2022**
(21) Anmeldenummer: 19209646.9
(22) Anmeldetag: 18.11.2019
(51) Int. Cl.: A01F 15/08, A01F 15/10

(54) **BALLENPRESSE UND VERFAHREN ZUM BETREIBEN EINER BALLENPRESSE**
BALER AND METHOD FOR OPERATING A BALER
PRESSE À BALLES ET PROCÉDÉ DE FONCTIONNEMENT D'UNE PRESSE À BALLES

(30) Priorität: 04.02.2019 DE 102019102631
(43) Veröffentlichungstag der Anmeldung: 05.08.2020
(73) Patentinhaber: Usines CLAAS France S.A.S, 57140 St. Rémy / Woippy (FR)
(72) Erfinder: Altmayer, Marc, 57320 Alzing (FR); Lallement, Jérôme, 57420 Solgne (FR); Dubois, Romain, 57000 Metz (FR)
(74) Vertreter: CLAAS Gruppe

(56) Entgegenhaltungen:
- EP-A1- 1 491 086
- EP-A1- 1 769 674
- EP-A1- 3 001 895
- EP-B1- 3 001 895
- DE-A1- 10 360 598
- FR-A1- 2 368 881

## Beschreibung

Die vorliegende Erfindung betrifft eine Ballenpresse, insbesondere eine Quaderballenpresse, gemäß Oberbegriff des Anspruches 1. Weiterhin betrifft die Erfindung ein Verfahren zum Betreiben einer Ballenpresse gemäß Oberbegriff des Anspruches 11.

Eine Quaderballenpresse zum Pressen von Erntegut ist beispielsweise aus der EP 3 001 895 B1 bekannt. Die Ballenpresse umfasst eine Presskammer, in der ein Presskolben zur Verdichtung von Erntegut zu einem Ballen oszillierend bewegbar ist. Eine der Presskammer vorgelagerte Vorkammer weist einen Einlaufbereich auf, in den von einer Aufnahmevorrichtung wie einer Pickup aufgenommenes Erntegut eintritt. Die Vorkammer weist weiterhin einen Auslaufbereich auf, welcher in die Presskammer einmündet. In der Vorkammer ist ein Raffer zwischen einer Erntegut in der Vorkammer verdichtenden Sammelhubbewegung und einer das Erntegut von der Vorkammer in die nachgeordnete Presskammer verlagernden Füllhubbewegung umschaltbar. Zur Ansteuerung des Raffers ist in der Vorkammer eine mechanische Sensoranordnung zur Bestimmung des Füllstandes des vorverdichteten Ernteguts in der Vorkammer angeordnet. Die Sensoranordnung umfasst eine drehbar gelagerte Welle mit daran angeordneten fächerförmigen Sensorelementen, welche abschnittsweise in die Vorkammer hineinragen. Der Vorkammer kommt die Aufgabe zu, ein möglichst homogenes Paket an Erntegut zu sammeln, bevor dieses von dem Raffer in die Presskammer befördert wird. Während des Füllens der Vorkammer hält die Sensoranordnung das zugeführte Erntegut zurück, bis durch den Druck, den das Erntegut auf die Sensoranordnung ausübt, diese aus der Vorkammer herausgeschwenkt wird und der Raffer von der Sammelhubbewegung in die Füllhubbewegung umgeschaltet wird.

Unter schwierigen Erntebedingungen, insbesondere bei der Verarbeitung von trockenem, kurzem Erntegut sowie geringem Ertrag, führt dies dazu, dass die Befüllung des Ballens nicht homogen ist. Der Materialvorschub des von der Aufnahmevorrichtung in die Vorkammer geförderten Ernteguts wird durch den Sammelhub des Raffers unterstützt, wobei es teilweise aufgrund des geringen Gewichts und der Brüchigkeit des Erntegutes an den Sensorelementen vorbei geschoben wird. Da dadurch kein oder ein nur verzögerter Druckaufbau auf die Sensorelemente auftritt, löst die Sensoranordnung nicht aus, so dass der Raffer weiterhin die Sammelhubbewegung ausführt. Der Bewegungsablauf des Raffers ist an den des Presskolbens gekoppelt, so dass dieser mit dem Erreichen des vorderen Totpunktes den Ausgang der Vorkammer freigibt. Das Erntegut, welche an der Sensoranordnung vorbeigefördert wurde, gelangt in die Presskammer. Dabei handelt es sich um geringe Mengen, welche sich im unteren Bereich des Presskanals ansammeln. Der Presskolben verdichtet somit mehrere solcher kleinen Erntegutpakete. Staut sich hingegen nachfolgend Erntegut in der Vorkammer auf, so wird dadurch die Sensoranordnung ausgelöst und ein gut gefülltes Erntegutpaket wird anschließend in den Presskanal gefördert. Mit den zuvor in die Presskammer geförderten kleineren Erntegutpaketen führt dies dazu, dass der Ballen als Ganzes keine homogene Füllung und eine ungleichmäßige Verdichtung aufweist.

Es ist daher die Aufgabe der vorliegenden Erfindung, eine Ballenpresse sowie ein Verfahren zum Betreiben einer Ballenpresse bereitzustellen, durch welche homogene Ballen auch unter ungünstigen Erntebedingungen herstellbar sind.

Die Lösung der Aufgabe erfolgt erfindungsgemäß durch die Merkmale des Anspruches 1. Vorteilhafte Ausgestaltungen der Erfindung sind in den Unteransprüchen angegeben.

Eine Ballenpresse, insbesondere Quaderballenpresse, weist eine Presskammer auf, in der ein Presskolben oszillierend bewegbar ist, und eine Vorkammer mit einem Einlaufbereich, in den von einer Aufnahmevorrichtung aufgenommenes Erntegut eintritt, und einen Auslaufbereich, der in die Presskammer einmündet, wobei in der Vorkammer ein Raffer zwischen einer Erntegut in der Vorkammer verdichtenden Sammelhubbewegung und einer das Erntegut von der Vorkammer in die nachgeordnete Presskammer verlagernden Füllhubbewegung umschaltbar ist, sowie mindestens einer in die Vorkammer schwenkbar ausgebildete Rückhalteanordnung. Gemäß der Erfindung weist die Rückhalteanordnung mindestens ein in die Vorkammer verschwenkbares Rückhaltemittel auf, wobei das Rückhaltemittel mindestens eine Sensoreinrichtung zur Bestimmung des Füllstandes der Vorkammer aufweist. Die Rückhalteanordnung und/oder das mindestens eine Rückhaltemittel mit Sensoreinrichtung ragt dabei in einer Rückhalteposition zumindest abschnittsweise in die Vorkammer hinein, und gibt in einer Ruheposition die Vorkammer frei, ist also aus dieser herausgeschwenkt. Durch die Rückhalteanordnung wird kurzes, brüchiges Erntegut aufgestaut und durch die an dem Rückhaltemittel angeordnete Sensoreinrichtung kann ein Füllstand der Vorkammer zuverlässig ermittelt werden, ohne dass zusätzliche aufwändige Vorrichtungen notwendig sind. Dadurch wird direkt durch die Rückhalteanordnung bzw. mindestens ein Rückhaltemittel eine Befüllung der Vorkammer ermittelt, wodurch ein verbessertes Signal zum Füllstand der Vorkammer ermittelt werden kann. Basierend auf diesem Signal kann durch eine mit der Sensoreinrichtung verbundene Steuerungsvorrichtung eine Füllhubbewegung des Raffers und ein Verschenken der Rückhalteanordnung eingeleitet werden.

Bevorzugt ist die Rückhalteanordnung und/oder das mindestens eine Rückhaltemittel mit der Sensoreinrichtung im Auslaufbereich der Vorkammer angeordnet. Somit lassen sich möglichst große Erntegutpakete in der Vorkammer aufstauen und gleichzeitig zuverlässig eine Füllmenge der Vorkammer ermitteln. Die Rückhalteanordnung bzw. das Rückhaltemittel wirkt dabei zusätzlich wie ein Verschluss der Vorkammer, so dass Erntegut nicht mehr unkontrolliert in die Presskammer gelangen kann.

In einer besonders bevorzugten Ausgestaltung der Erfindung weist die Rückhalteanordnung und/oder das Rückhaltemittel zumindest eine rechenförmige, hakenförmige oder klauenförmige Auskragung auf, welche um eine Welle schwenkbar an einer der Vorkammer abgewandten Seite des Bodens der Vorkammer angeordnet ist. Die Auskragung kann sich zumindest abschnittsweise durch wenigstens eine schlitzförmige Öffnung in der Rückwand der Vorkammer erstrecken. Eine Anordnung der Auskragungen und/oder Öffnungen des mindestens einen Rückhaltemittels erfolgt dabei neben den jeweiligen Bewegungsbahnen des Raffers.

Das Rückhaltemittel weist eine Auskragung in Form eines kippbar an einem Schaft des Rückhaltemittels angeordneten Kipphebels auf. Der Schaft ist mit der an einer der Vorkammer abgewandten Seite des Bodens der Vorkammer angeordneten Welle verbunden, so dass der Kipphebel zusammen mit dem Schaft um diese Welle verschwenkbar ist. Der Boden der Vorkammer kann im Bereich der Öffnungen für Rückhaltemittel jeweils eine der Anzahl an Auskragungen entsprechende Anzahl an Führungselementen aufweisen, durch welche das Rückhaltemittel in den Öffnungen geführt werden kann.

Der Kipphebel weist ein erstes der Vorkammer zugewandtes Ende und ein zweites, dem ersten gegenüberliegendes Ende auf, wobei der Kipphebel zwischen den Enden mit dem Schaft kippbar verbunden ist und an seinem zweiten Ende mit der Sensoreinrichtung verbunden ist. Über eine Kippbewegung des Kipphebels aufgrund von sich aufstauendem Erntegut kann eine Bestimmung des Füllstandes in der Vorkammer durch eine Sensoreinrichtung außerhalb der Vorkammer erfolgen. Dies bietet den Vorteil, dass eine entsprechende Sensoreinrichtung geschützt angeordnet werden kann, wodurch eine Störanfälligkeit der Sensoreinrichtung reduziert werden kann.

Die Sensoreinrichtung weist zumindest eine einer Kippbewegung insbesondere entgegenwirkende Feder, einen Stößel und ein Sensorelement auf, wobei der Stößel an dem zweiten Ende gelagert und in einer ungekippten Stellung des Kipphebels beabstandet zu dem Sensorelement angeordnet ist. Die Feder ist zwischen dem zweiten Ende und dem Schaft des Rückhaltemittels gelagert und wirkt beispielsweise einer Auslenkung des Kipphebels durch sich aufstauendes Erntegut entgegen, so dass eine Signalgenerierung verzögert wird. Die Feder oder eine Federkraft der Feder kann beispielsweise je nach Erntegut und/oder Erntebedingungen einstellbar sein. Der Stößel, welcher zunächst beabstandet zu dem Sensorelement angeordnet ist, wird bei entsprechend großer Auslenkung des Kipphebels und einem entsprechenden Füllstand der Vorkammer das Sensorelement kontaktieren, so dass dieser ein entsprechendes Füllstandsignal erzeugt und, beispielsweise, an eine Steuerungsvorrichtung leitet. Das Signal kann dabei bei Kontakt und/oder entsprechendem Druck des Stößels auf den Sensor, beispielsweise einem Kontakt-, Druck. Oder Kraftsensor, generiert werden. Der Abstand des Stößels zu dem Sensor in ungekipptem Zustand des Kipphebels kann je nach Erntegut und/oder Erntebedingungen einstellbar sein.

Besonders bevorzugt ist zur Betätigung der Rückhalteanordnung und/oder des Rückhaltemittels zumindest ein Aktuator vorgesehen. Vorzugsweise ist der zumindest eine Aktuator als ein Hydraulikzylinder und/oder Federelement ausgeführt, welcher zum Überführen der Rückhalteanordnung und/oder des Rückhaltemittels in die Rückhalteposition und/oder Ruheposition eingerichtet ist. Dabei kann es beispielsweise sich um einen einfachwirkenden Hydraulikzylinder handeln, welcher den Vorteil bietet, dass die Rückhalteanordnung bzw. das Rückhaltemittel auch in einer der Position gehalten werden können.

Vorteilhafterweise beruht die Ansteuerung des zumindest einen Aktuators auf einem von der zumindest einen Sensoreinrichtung bereitgestellten Signal beruhen. Dabei kann der zumindest eine Aktuator bei Erreichen eines durch das aufgestaute Erntegut in der Vorkammer auf die Sensoreinrichtung ausgeübten Drucks in der Weise angesteuert werden, dass das mindestens eine Rückhaltemittel aus seiner Rückhalteposition in seine Ruheposition überführbar ist. Dies kann im Fall der Ausführung des Aktuators als ein einfach wirkender Hydraulikzylinder durch Drucklosschaltung erfolgen. Durch das Zusammenwirken mit dem mindestens einen weiteren, als Federelement ausgeführten, Aktuator kann das mindestens eine Rückhaltemittel in seine Ruheposition überführt und in dieser gehalten werden. Denkbar ist auch, dass der Hydraulikzylinder in der Weise angesteuert wird, dass das mindestens eine Rückhaltemittel in die Ruheposition überführt wird, während der weitere, als Federelement ausgebildete, Aktuator das mindestens eine Rückhaltemittel in die Rückhalteposition überführt.

Gemäß einer bevorzugten Weiterbildung der Erfindung ist im Einlaufbereich der Vorkammer eine weitere Sensoreinrichtung zur Füllstandserfassung angeordnet. Diese weitere Sensoreinrichtung kann in Form von Kippelementen ausgebildet sein, welche drehbar an einer Welle gelagert sind und zumindest teilweise in die Vorkammer ragen. Bei entsprechendem Druck durch das Erntegut auf die Kippelemente können die Kippelemente aus der Vorkammer heraus schwenken. Dabei kann die Welle dieser weiteren Sensoreinrichtung mit einer voreinstellbaren Kraft beaufschlagt werden, welche größer ist, als die Kraft, mit der die Welle der im Ausgangsbereich angeordneten Sensoreinrichtung beaufschlagt wird. Dadurch kann gewährleistet werden, dass in kleinen Schwaden aufgenommenes Erntegut die im Einlaufbereich angeordnete weitere Sensoreinrichtung passieren kann, ohne die Sensoreinrichtung auszulösen. Somit kann die Vorkammer gefüllt werden, bis das Erntegut die Sensoreinrichtung im Auslaufbereich auslöst, um den Raffer zur Ausführung der Füllhubbewegung umzuschalten.

Vorteilhafterweise beruht eine Druckbeaufschlagung des zumindest einen als Hydraulikzylinder ausgeführten Aktuators auf einem von einer Steuerungsvorrichtung generierten Steuersignal. Dabei kann der Druck in dem zumindest einen Hydraulikzylinder entsprechend einem oder mehrerer Füllstandsignale durch die Steuerungsvorrichtung geregelt werden. So kann beispielsweise einstellbar sein, bei welcher Anzahl an Signalen und beispielsweise bei welchen Kräften der Aktuator betätigt und damit die Rückhalteanordnung bzw. das Rückhaltemittel mit der Sensoreinrichtung verlagert werden soll.

In einer bevorzugten Ausgestaltung der Erfindung ist die Rückhalteanordnung und/oder das Rückhaltemittel in Abhängigkeit von zumindest einem vorgebbaren Erntegutparameter, insbesondere Feuchtigkeit, Erntegutlänge und/ oder Erntegutmenge, insbesondere in der Vorkammer, in eine Rückhalteposition und/oder Ruheposition verlagerbar. Die Erntegutmenge kann dabei die Erntegutmenge in der Vorkammer sein. Für die Erntegutmenge kann beispielsweise der Füllstand in der Vorkammer, welcher durch die Sensoreinrichtung an dem Rückhaltemittel erfasst werden kann, ein Maß sein.

In einer besonders vorteilhaften Ausgestaltung der Erfindung ist in der Vorkammer in dem Auslaufbereich deckenseitig ein Absatz ausgebildet, welcher zwischen der Rückhalteanordnung und dem Presskanal angeordnet ist. Der Absatz kann beispielsweise durch ein Absatzelement wie ein Winkelblech gebildet werden. Hierbei kann der Querschnitt der Vorkammer im Bereich vor dem Absatz durch mindestens ein Absatzelement verringert werden. Dies hat den Vorteil, dass Erntegut, welches durch den Raffer zur Presskammer gefördert wurde, nicht so leicht in die Vorkammer zurückfallen kann, sondern auf dem Absatz aufsitzt, so dass das Zurückrutschen vermieden werden kann.

Weiterhin wird zur Lösung der eingangs gestellten Aufgabe ein Verfahren mit den Merkmalen des Anspruchs 11 vorgeschlagen.

Vorteilhafterweise wird die Rückhalteanordnung und/oder das mindestens eine Rückhaltemittel in Abhängigkeit von zumindest einem vorgebbaren Erntegutparameter, insbesondere Feuchtigkeit, Erntegutlänge und/ oder Erntegutmenge, betätigt.

Die vorliegende Erfindung wird nachstehend anhand eines in den Zeichnungen dargestellten Ausführungsbeispieles näher erläutert.

Es zeigen:
- Fig. 1: eine schematische Schnittdarstellung einer Ballenpresse;
- Fig. 2: eine perspektivische Teilansicht des Bodens einer Vorkammer von hinten mit einer Rückhalteanordnung in einer Rückhalteposition;
- Fig. 3: eine Seitenansicht der Vorkammer mit der Rückhalteanordnung in einer Rückhalteposition; und
- Fig. 4: eine Seitenansicht der Vorkammer nach Fig. 3 mit der Rückhalteanordnung in einer Ruheposition.

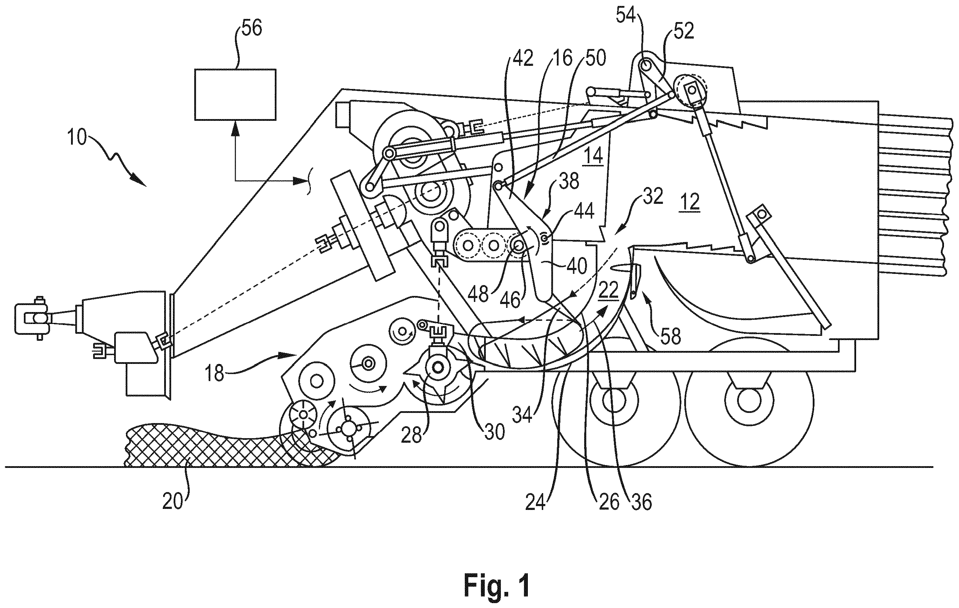

Die in Fig. 1 in schematischer Seitenansicht gezeigte Ballenpresse 1 ist als ein Anhänger zum Ankoppeln an ein nicht dargestelltes Zugfahrzeug ausgelegt. Sie umfasst eine Aufnahmevorrichtung 18, auch als Pickup bezeichnet, zum Aufnehmen von Erntegut 20 vom Boden. Das von der Aufnahmevorrichtung 18 gesammelte und von einer Schneidvorrichtung 28 zerkleinerte Erntegut 20 wird zu einem Einlaufbereich 30 einer schachtartigen Vorkammer 22 gefördert, deren Auslaufbereich 33 in eine Presskammer 12 mündet. Ein in der Presskammer 12 hin und her beweglicher Presskolben 14 verdichtet das aus der Vorkammer 22 zugeführte Erntegut 20, wobei der Ballen mit jedem neu zugeführten Erntegut 20 anwächst und langsam durch die Presskammer wandert. Dabei dient das bereits durch den Presskolben 14 verdichtete Erntegut 20 und bereits fertig gestellte Pressballen als Widerlager für die Verdichtung des weiter nachkommenden Erntegutes 20.

Die Vorkammer 22 erstreckt sich im Wesentlichen bogenförmig zwischen ihrem Einlaufbereich 30 und dem Auslaufbereich 32 und ist durch einen konkav ausgebildeten Boden 24 und eine im Wesentlichen parallel dazu verlaufende Decke 26 begrenzt. Die Decke 26 weist eine Mehrzahl von Längsschlitzen auf, durch die hindurch Rafferzinken 34 eines Raffers 16 in den Zuführkanal 22 eintauchen können. Die Rafferzinken 34 sind in gleichmäßigen Abständen an einem - nicht dargestellten - Querträger montiert. Zwei Rafferhebel 38 haben jeweils zwei im stumpfen Winkel zueinander angeordnete Hebelarme 40, 42 die an einer Achse 44 aufeinandertreffen. Die unteren Hebelarme 40 der beiden Rafferhebel 38 halten den Querträger. Die Achse 44 ist durch zwei Rafferkurbeln 46 auf einer kreisförmigen Bahn um eine Abtriebswelle 48 angetrieben. Das freie Ende des oberen Hebelarms 42 jedes Rafferhebels 38 ist durch eine Rafferkoppelstange 50 an einen Steuerarm 52 angelenkt, der oberhalb der Presskammer 12 angeordnet und um eine von einer Steuerwelle 54 festgelegte Achse schwenkbar ist.

Das Zusammenwirken von Rafferkurbeln 46 und Rafferkoppelstange 50 führt dazu, dass die Rafferzinken 34 periodisch die Vorkammer 22 durchlaufen und dabei das von der Aufnahmevorrichtung 18 zugeführte Erntegut 20 in der Vorkammer 22 vorverdichten. Dieser vorverdichtende Bewegungsablauf wird als Sammelhubbewegung des Raffers 16 bezeichnet. Bei der n-ten Bewegung der Rafferzinken 34 ist der Presskolben 14, wie in der Figur 1 gezeigt, nach vorne zurückgezogen, so dass die Rafferzinken 34 das Erntegut in die Presskammer 12 hineinschieben können. Dieser, das Erntegut aus der Vorkammer 22 in die Presskammer 12 verlagernde, Bewegungsablauf wird als Füllhubbewegung des Raffers 16 bezeichnet. Die Länge der Vorkammer 22 entspricht etwa der Höhe eines Ballens, da bei einer Füllhubbewegung das vorverdichtete Erntegut 20 aus der Vorkammer 22 im Wesentlichen senkrecht in die Presskammer 12 gehoben wird und mit der Verdichtung durch den Presskolben 14 eine neue Schicht des Ballens bildet.

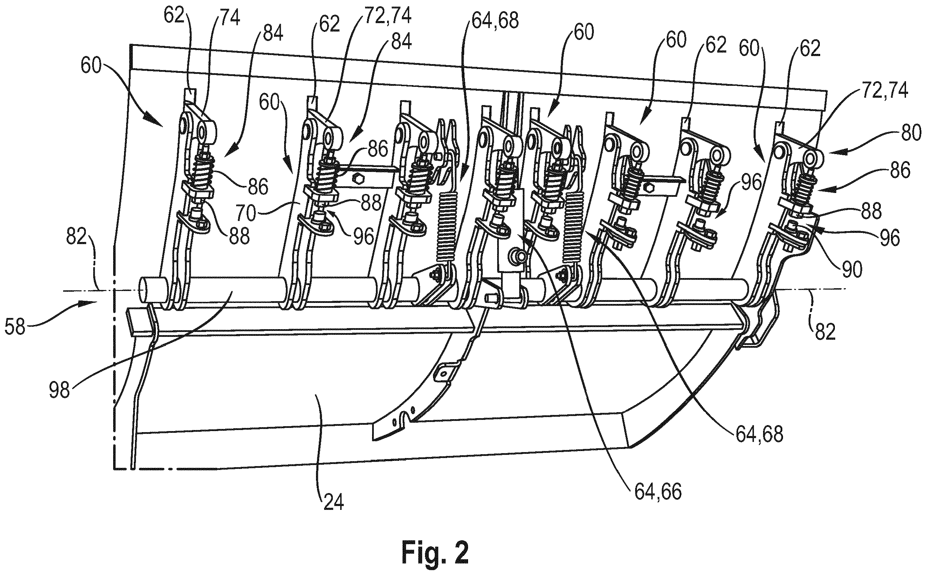

In Fig. 2 ist eine perspektivische Teilansicht des Bodens 24 einer Vorkammer 22 dargestellt. Die Ansicht zeigt die der Vorkammer 22 abgewandte Seite des Bodens 24, an dem die Rückhalteanordnung 58 mit seinen Rückhaltemitteln 60 im Bereich des Auslaufbereichs 32 der Vorkammer 22 angeordnet sind. Hierbei sind die Rückhalteanordnung 58 und die Rückhaltemitteln 60 in einer Rückhalteposition dargestellt, bei der die Rückhalteanordnung 58 zumindest teilweise durch den Boden 24 hindurch in die Vorkammer 22 hineinragen, um Erntegut 20 zurückzuhalten.

Die Rückhalteanordnung 58 weist acht Rückhaltemittel 60 auf, welche jeweils mit einem unteren Ende auf einer gemeinsamen Welle 98 angeordnet und um deren Drehachse 82 herum drehbar gelagert sind. Die Rückhaltemittel 60 umfassen jeweils einen Schaft 70, welcher mit einem Ende drehfest an der Welle 98 angeordnet ist und mit seinem anderen Ende mit einer rechenförmigen, hakenförmigen oder klauenförmigen Auskragung 72 verbunden ist. Diese Auskragung 72 ragt jeweils durch ein in dem Boden 24 der Vorkammer 22 ausgebildeten Öffnung 60 hindurch und zumindest teilweise in die Vorkammer 22 hinein, wo sie mit dem Erntegut zusammenwirken und dies zurückhalten können. Die Auskragungen 72 sind in Form von Kipphebeln 74 ausgestaltet, welche zwischen einem ersten vorkammerseitigen Ende (nicht dargestellt) und einem zweiten Ende 80 um eine Kippachse 76 kippbar an dem Schaft 70 gelagert sind. An dem zweiten Ende 80 ist der Kipphebel 74 mit einer Sensoreinrichtung 84 verbunden, welche basierend auf der Kippbewegung des Kipphebels 74 bei gefüllter Vorkammer 22 ein entsprechendes Signal erzeugen und beispielsweise an die Steuerungsvorrichtung senden kann. An der Welle 98 greifen im dargestellten Ausführungsbeispiel mehrere Aktuatoren 64 an, welche zum Verschwenken der Rückhalteanordnung 58 und den Rückhaltemitteln 60 dienen. Im dargestellten Ausführungsbeispiel ist einer der Aktuatoren 64 als Hydraulikzylinder 66 und die beiden anderen Aktuatoren 64 sind als Federelemente 68 ausgebildet. Um die Rückhalteanordnung 58 in der Rückhalteposition zu halten, wird der Hydraulikzylinder 66 eingefahren oder drucklos geschaltet, so dass die Rückhalteanordnung 58 durch die Federelemente 68 in der Rückhaltposition gehalten wird. Dies hat den Vorteil, dass bei einer zu hohen Erntegutmenge in der Vorkammer die Rückhaltemittel 60 durch das Erntegut ausgelenkt und bei weiter ansteigender Erntegutmenge entgegen der Federkraft der Federelemente 68 in eine Ruheposition verschwenkt werden können, so dass ein Schutz gegen Beschädigungen durch Überlastung gegeben ist. Denkbar ist es jedoch auch, nur einen geeigneten Aktuator 64 vorzusehen, welcher zum Verschwenken der Rückhalteanordnung 58 in die jeweiligen Positionen dient.

Eine Sensoreinrichtung 84 eines Rückhaltemittels 60 umfasst neben einer Feder 86, einen Stößel 88 und ein Sensorelement 90. Die Feder 86 ist dabei an dem zweiten Ende 80 des Kipphebels 74 angeordnet und an einem Vorsprung des Schaftes 70 abgestützt. Innerhalb der Feder 86 ist dabei ein Stößel 88 angeordnet, welcher ebenfalls an dem zweiten Ende 80 des Kipphebels 74 angeordnet ist und sich in Richtung des Sensorelementes 90 erstreckt. In einem ungekippten Zustand des Kipphebels 74 weist der Stößel 88 einen Abstand 96 zu dem Sensor 90 auf. Mit zunehmender Ansammlung von Erntegut in der Vorkammer 22 sammelt sich dies unter den Auskragungen 72 und Kipphebeln 74 in der Vorkammer 22 und führt zu einer zunehmenden Auslenkung des Kipphebels 74, wobei die Feder 86 dieser Auslenkung entgegenwirkt, damit nicht zu schnell ein Signal erzeugt wird und einen Füllhub des Raffers 16 mit zu wenig Erntegut auslöst. Mit zunehmender Auslenkung des Kipphebels 74 nähert sich der Stößel 88 zunehmend dem Sensorelement 90. Nach Überwindung der Federkraft kontaktiert der Stößel 88 das Sensorelement 90, welches daraufhin ein Signal zum Erreichen des vorgegebenen Füllstandes erzeugt. Das Sensorelement kann dabei ein Kontakt-, Druck-, oder Kraftsensor sein. Die Feder 86 und/oder der Stößel 88 können je nach Erntegutart, Erntebedingungen und/oder gewünschter Pressdichte bzw. Vorverdichtung des Erntegute 20 einstellbar sein. So benötigt eine stärkere Feder 86 eine höhere Kraft zur Auslenkung der Kipphebels 74 und Erzeugung des Sensorsignals als eine weichere Feder, so dass eine höhere Vorverdichtung des Erntegute 20 in der Vorkammer 22 erfolgt. Ebenso kann eine Verkürzung des Stößels 88 zu einer höheren Vorverdichtung führen, da der Kiüühebel 74 nun weiter ausgelenkt werden muß. Eine Verkürzung des Stößels 88, welcher beispielsweise als Gewindestange oder Schraube ausgebildet sein kann, bewirkt eine Vergrößerung des Abstandes 96 zwischen Stößel 88 und Sensorelement 90.

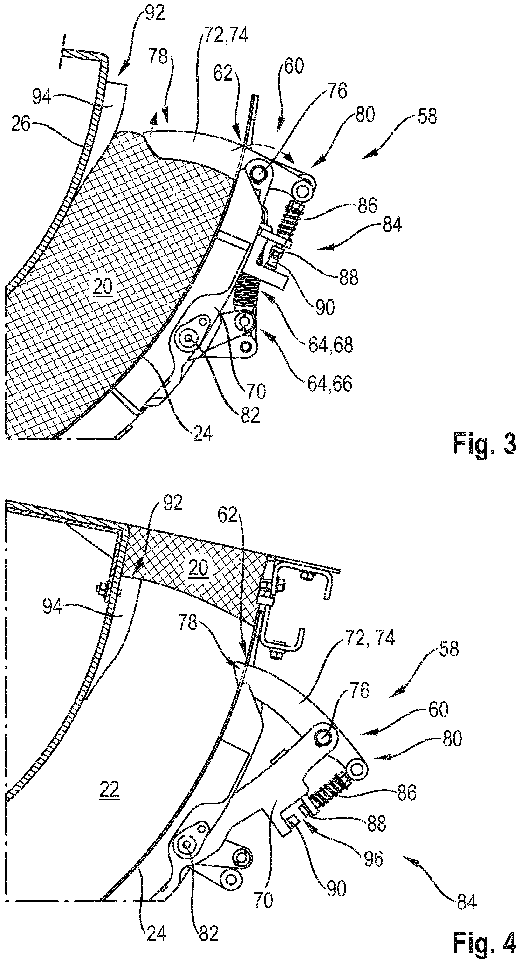

In Fig. 3 ist eine Teilansicht der Vorkammer 22 gemäß Fig. 2 von der Seite dargestellt, wobei die Rückhalteanordnung 58 in einer Rückhalteposition dargestellt ist. Während der Sammelhübe des Raffers 16 füllt sich die Vorkammer 22 zwischen dem Boden 24 und der Decke 26 mit Erntegut 20. Das dabei vorverdichtete Erntegut 20 wird im Wesentlichen durch die Rückhalteanordnung 58 mit den Rückhaltemitteln 60 und deren Auskragungen 72 im Auslaufbereich 32 aufgestaut, wobei die Auskragungen 72 bzw. Kipphebel 74 zunehmenden Kräften ausgesetzt sind und dadurch zunehmend ausgelenkt werden. Dies geschieht bis zu dem Punkt, an dem die von dem Erntegut aufgebachte Druckkraft größer ist, als die auf den Kipphebel 74 ausgeübte Federkraft der Feder 86, so dass der Stößel 88 das Sensorelement 90 kontaktiert. Dies kann an einem oder mehreren Rückhaltemitteln 60 und deren Sensoreinrichtungen 84 gleichzeitig passieren, oder zeitlich versetzt.

Das erste Ende eines Kipphebels 74 ist an einer der Presskammer 12 abgewandten, unteren Seite, leicht abgeschrägt. Hierdurch kann das Erntegut 20 den Kipphebel 74 besser fassen und zuverlässiger auslenken. Zudem kann bei einer zu großen Füllmenge der Vorkammer 22 das Erntegut endseitig an dem Kipphebel 74 vorbeigedrückt werden, so dass die zusätzlich zu der Kraft quer zur zum Kipphebel 74 eine Kraftkomponente in Längsrichtung des Kipphebels 74 und in Richtung des Bodens 24 der Vorkammer 22 erzeugt werden kann. Dies hat den Vorteil, dass über den Kipphebel 74 das gesamte Rückhaltemittel 60 entgegen den Haltekräften der Federelemente 68 aus der Vorkammer herausgedrückt werden kann, so dass Beschädigungen der Rückhalteanordnung 58 vermieden werden können. Die Generierung eines Füllstandsignals durch die Sensoreinrichtung 84 der Rückhaltemittel 60 funktioniert auch bei ausgelenktem Rückhaltemittel 60, da die Sensoreinrichtung 84 an dem Rückhaltemittel 60 direkt angeordnet ist. Um diesen Effekt zu verstärken, sind deckenseitig gegenüberliegend der Kipphebel 74 Absatzelemente 94, beispielsweise in Form von abgewinkelten Blechen, angeordnet, welche im Bereich der Kipphebel 74 eine Verengung der Vorkammer aufgrund ihrer rampenartigen Form bewirken. An ihrem presskammerseitigen Ende weisen die Absatzelemente 96 eine Kante auf, durch welche presskammerseitig ein Absatz 92 ausgebildet wird. Der Absatz 92 ist zwischen der Presskammer 12 und den Rückhaltemitteln 60 und deren Auskragungen 72 angeordnet. Dies hat den Vorteil, dass nach einem Füllhub des Raffers 16 das Erntegut 20 nicht wieder in die Vorkammer 22 zurückrutschen kann, sondern an dem Absatz 92 aufliegt.

Wenn sich die Rückhaltemittel 60 durch das Einschwenken der Auskragungen 72 in die Vorkammer 22 in der Rückhalteposition befindet, wirken die Rückhaltemittel 60 wie ein Verschluss. Das durch die Sammelhübe des Raffers 16 in die Vorkammer 22 in Förderrichtung 36 geförderte Erntegut wird von den Auskragungen 72 zurückgehalten, wodurch ein Entweichen in die Presskammer 12 zumindest weitgehend vermieden wird. Leichtes Erntegut kann sich unterhalb der Auskragungen 72 aufstauen. Ist eine ausreichende Befüllung erreicht, führt der von dem aufgestauten Erntegut 20 über die Kipphebel 74 auf die Sensoreinrichtungen 84 ausgeübte Druck dazu, dass diese entsprechende Signale generieren und die Rückhalteanordnung 58 aus der Vorkammer 22 ausschwenkt und die Füllhubbewegung initiiert wird. Während und kurz nach einem Füllhub des Raffers 16 ist die Rückhalteanordnung 58 aus der Rückhalteposition in die Ruheposition verschwenkt.

In Fig. 4 wird das Rückhaltemittel 25 durch den Hydraulikzylinder 66 in der Ruheposition gehalten. Das in die Presskammer 12 geförderte Erntegut 20 liegt auf dem Absatz 92 auf und wird so daran gehindert, in die Vorkammer 22 zurückzurutschen, wodurch im Wesentlichen ein Großteil des in die Presskammer 12 gehobenen Erntegutes 20 dort zu einem Ballen verdichtet werden kann. Zusätzlich kann die Rückhalteanordnung 58 in die Rückhalteposition verschenkt werden, wodurch die Vorkammer 22 gegenüber der Presskammer 12 im Wesentlichen abgeschlossen wird, so dass Erntegut 20 nur schwierige in die Vorkammer 22 zurückfallen kann.

**Bezugszeichenliste**

| | | | |
|---|---|---|---|
| 10 | Ballenpresse | 70 | Schaft |
| 12 | Presskammer | 72 | Auskragung |
| 14 | Presskolben | 74 | Kipphebel |
| 16 | Raffer | 76 | Kippachse |
| 18 | Aufnahmevorrichtung | 78 | erstes Ende |
| 20 | Erntegut | 80 | zweites ende |
| 22 | Vorkammer | 82 | Drehachse |
| 24 | Boden | 84 | Sensoreinrichtung |
| 26 | Decke | 86 | Feder |
| 28 | Schneidvorrichtung | 88 | Stößel |
| 30 | Einlaufbereich | 90 | Sensorelement |
| 32 | Auslaufbereich | 92 | Absatz |
| 34 | Rafferzinken | 94 | Absatzelement |
| 36 | Förderrichtung | 96 | Abstand |
| 38 | Rafferhebel | 98 | Welle |
| 40 | Hebelarm | | |
| 42 | Hebelarm | | |
| 44 | Achse | | |
| 46 | Rafferkurbel | | |
| 48 | Abtriebswelle | | |
| 50 | Rafferkoppelstange | | |
| 52 | Steuerarm | | |
| 54 | Steuerwelle | | |
| 56 | Steuerungsvorrichtung | | |
| 58 | Rückhalteanordnung | | |
| 60 | Rückhaltemittel | | |
| 62 | Öffnung | | |
| 64 | Aktuator | | |
| 66 | Hydraulikzylinder | | |
| 68 | Federelement | | |

## Patentansprüche

1. Ballenpresse, mit einer Presskammer (12), in der ein Presskolben (14) oszillierend bewegbar ist, und einer Vorkammer (22) mit einem Einlaufbereich (30), in den von einer Aufnahmevorrichtung (18) aufgenommenes Erntegut (20) eintritt, und einem Auslaufbereich (32), der in die Presskammer (12) einmündet, wobei in der Vorkammer (22) ein Raffer (16) zwischen einer Erntegut (20) in der Vorkammer (22) verdichtenden Sammelhubbewegung und einer das Erntegut (20) von der Vorkammer (22) in die nachgeordnete Presskammer (12) verlagernden Füllhubbewegung umschaltbar ist, sowie mindestens einer in die Vorkammer (22) schwenkbar ausgebildete Rückhalteanordnung (58), wobei die Rückhalteanordnung (58) mindestens ein in die Vorkammer (22) verschwenkbares Rückhaltemittel (60) aufweist, wobei das Rückhaltemittel (60) mindestens eine Sensoreinrichtung (84) zur Bestimmung des Füllstandes der Vorkammer (22) aufweist, **dadurch gekennzeichnet, dass** das Rückhaltemittel (60) eine Auskragung (72) in Form eines kippbar an einem Schaft (70) des Rückhaltemittels (60) angeordneten Kipphebels (74) aufweist, wobei der Kipphebel (74) ein erstes der Vorkammer (22) zugewandtes Ende (78) und ein dem ersten gegenüberliegendes zweites Ende (80) aufweist, wobei der Kipphebel (74) zwischen den Enden (78, 80) mit dem Schaft (70) kippbar verbunden ist und an seinem zweiten Ende (80) mit der Sensoreinrichtung (84) verbunden ist und die Sensoreinrichtung (84) zumindest eine einer Kippbewegung insbesondere entgegenwirkende Feder (86), einen Stößel (88) und ein Sensorelement (90) aufweist, wobei der Stößel (88) an dem zweiten Ende (80) gelagert und in einer ungekippten Stellung des Kipphebels (74) beabstandet zu dem Sensorelement (90) angeordnet ist.

2. Ballenpresse nach Anspruch 1, **dadurch gekennzeichnet, dass** die Rückhalteanordnung (58) und/oder das mindestens eine Rückhaltemittel (60) mit der Sensoreinrichtung (84) im Auslaufbereich (32) der Vorkammer (22) angeordnet ist.

3. Ballenpresse nach Anspruch 1 oder 2, **dadurch gekennzeichnet, dass** die Rückhalteanordnung (58) und/oder das Rückhaltemittel (60) zumindest eine rechen-, haken- oder klauenförmige Auskragung (72) aufweist, welche um eine Welle (98) schwenkbar an einer der Vorkammer (22) abgewandten Seite des Bodens (24) der Vorkammer (22) angeordnet ist.

4. Ballenpresse nach einem der vorherigen Ansprüche, **dadurch gekennzeichnet, dass** zur Betätigung der Rückhalteanordnung (58) und/oder des Rückhaltemittels (60) zumindest ein Aktuator (64) vorgesehen ist.

5. Ballenpresse nach Anspruch 4, **dadurch gekennzeichnet, dass** der zumindest eine Aktuator (64) als ein Hydraulikzylinder (66) und/oder Federelement (68) ausgeführt ist, der zum Überführen der Rückhalteanordnung (58) und/oder des Rückhaltemittels (60) in die Rückhalteposition und/oder Ruheposition eingerichtet ist.

6. Ballenpresse nach einem der vorherigen Ansprüche, **dadurch gekennzeichnet, dass** die Ansteuerung des zumindest einen Aktuators (64) auf einem von der zumindest einen Sensoreinrichtung (84) bereitgestellten Signal beruht.

7. Ballenpresse nach einem der vorherigen Ansprüche, **dadurch gekennzeichnet, dass** im Einlaufbereich (30) der Vorkammer (22) eine weitere Sensoreinrichtung zur Füllstanderfassung angeordnet ist.

8. Ballenpresse nach einem der vorherigen Ansprüchen, **dadurch gekennzeichnet, dass** eine Betätigung des zumindest einen als Hydraulikzylinder (66) ausgeführten Aktuators (64) auf einem von einer Steuerungsvorrichtung (24) generierten Steuersignal beruht.

9. Ballenpresse nach einem der vorherigen Ansprüche, **dadurch gekennzeichnet, dass** die Rückhalteanordnung (58) und/oder das Rückhaltemittel (60) in Abhängigkeit von zumindest einem vorgebbaren Erntegutparameter, insbesondere Feuchtigkeit, Erntegutlänge und/ oder Erntegutmenge, insbesondere in der Vorkammer (22), in eine Rückhalteposition und/oder Ruheposition verlagerbar ist.

10. Ballenpresse nach einem der vorherigen Ansprüche, **dadurch gekennzeichnet, dass** in der Vorkammer (22) in dem Auslaufbereich (32) deckenseitig ein Absatz (92) ausgebildet ist, welcher zwischen der Rückhalteanordnung (58) und dem Presskanal (12) angeordnet ist.

11. Verfahren zum Betreiben einer Ballenpresse (10), umfassend eine Presskammer (12), in der ein Presskolben (14) oszillierend bewegt wird, und eine Vorkammer (22) mit einem Einlaufbereich (30), in die von einer Aufnahmevorrichtung (18) aufgenommenes Erntegut (20) eintritt, und einem Auslaufbereich (32), der in die Presskammer (12) einmündet, wobei in der Vorkammer (22) ein Raffer (16) zwischen einer Erntegut (20) in der Vorkammer (22) verdichtenden Sammelhubbewegung und einer das Erntegut (20) von der Vorkammer (22) in die nachgeordnete Presskammer (12) verlagernden Füllhubbewegung umgeschaltet wird, wobei der Vorkammer (22) eine in diese verschwenkbar ausgebildete Rückhalteanordnung (58) zugeordnet ist, wobei die Rückhalteanordnung (58) mindestens ein in die Vorkammer (22) verschwenkbares Rückhaltemittel (60) aufweist, wobei das Rückhaltemittel (60) mindestens eine Sensoreinrichtung (84) zur Bestimmung des Füllstandes der Vorkammer (22) aufweist, wobei die Rückhalteanordnung (58) und/oder das mindestens eine Rückhaltemittel (60), sowie insbesondere der Raffer (16), in Abhängigkeit von einem Steuersignal, welches von der wenigstens einen Sensoreinrichtung (84) füllstandabhängig generiert wird, betätigt und/oder verschwenkt wird, **dadurch gekennzeichnet, dass** das Rückhaltemittel (60) eine Auskragung (72) in Form eines kippbar an einem Schaft (70) des Rückhaltemittels (60) angeordneten Kipphebels (74) aufweist, wobei der Kipphebel (74) ein erstes der Vorkammer (22) zugewandtes Ende (78) und ein dem ersten gegenüberliegendes zweites Ende (80) aufweist, wobei der Kipphebel (74) zwischen den Enden (78, 80) mit dem Schaft (70) kippbar verbunden ist und an seinem zweiten Ende (80) mit der Sensoreinrichtung (84) verbunden ist und die Sensoreinrichtung (84) zumindest eine einer Kippbewegung insbesondere entgegenwirkende Feder (86), einen Stößel (88) und ein Sensorelement (90) aufweist, wobei der Stößel (88) an dem zweiten Ende (80) gelagert und in einer ungekippten Stellung des Kipphebels (74) beabstandet zu dem Sensorelement (90) angeordnet ist, wobei das Steuersignal von dem Sensorelement (90) bei einem Kontakt mit dem Stößel (88) generiert wird.

12. Verfahren nach Anspruch 11, **dadurch gekennzeichnet, dass** die Rückhalteanordnung (58) und/oder das mindestens eine Rückhaltemittel (60) in Abhängigkeit von zumindest einem vorgebbaren Erntegutparameter, insbesondere Feuchtigkeit, Erntegutlänge und/ oder Erntegutmenge, betätigt wird.

## Claims

1. A baler with a bale chamber (12) in which a baler piston (14) can be moved in oscillation, and an antechamber (22) with an inlet region (30) into which the harvested material (20) picked up by a pickup device (18) enters and a discharge region (32) which discharges into the bale chamber (12), wherein a packer (16) can be changed over in the antechamber (22) between a collecting stroke movement which compacts harvested material (20) in the antechamber (22) and a filling stroke movement which transfers the harvested material (20) from the antechamber (22) into the downstream bale chamber (12), as well as at least one retaining assembly (58) configured so as to be pivotable into the antechamber (22), wherein the retaining assembly (58) has at least one retaining means (60) which can be pivoted into the antechamber (22), wherein the retaining means (60) has at least one sensor device (84) for determining the fill level of the antechamber (22), **characterized in that** the retaining means (60) has a projection (72) in the form of a rocker arm (74) which is disposed on a shank (70) of the retaining means (60) so as to be capable of tilting, wherein the rocker arm (74) has a first end (78) which faces the antechamber (22) and a second end (80) which is opposite to the first end, wherein the rocker arm (74) is connected to the shank (70) between the ends (78, 80) so as to be capable of tilting and is connected to the sensor device (84) at its second end (80) and the sensor device (84) has at least a spring (86) which in particular opposes a tilting movement, a plunger (88) and a sensor element (90), wherein the plunger (88) is mounted at the second end (80) and is disposed at a distance from the sensor element (90) when the rocker arm (74) is in a position which is not tilted.

2. The baler according to claim 1, **characterized in that** the retaining assembly (58) and/or the at least one retaining means (60) is disposed with the sensor device (84) in the discharge region (32) of the antechamber (22).

3. The baler according to claim 1 or claim 2, **characterized in that** the retaining assembly (58) and/or the retaining means (60) has at least one rake-shaped, hook-shaped or claw-shaped projection (72) which is pivotably disposed about a shaft (98) on a side of the floor (24) of the antechamber (22) which faces away from the antechamber (22).

4. The baler according to one of the preceding claims, **characterized in that** at least one actuator (64) is provided in order to actuate the retaining assembly (58) and/or the retaining means (60).

5. The baler according to claim 4, **characterized in that** the at least one actuator (64) is configured as a hydraulic cylinder (66) and/or spring element (68) which is configured to transpose the retaining assembly (58) and/or the retaining means (60) into the retaining position and/or inoperative position.

6. The baler according to one of the preceding claims, **characterized in that** the control of the at least one actuator (64) is based on a signal provided by the at least one sensor device (84).

7. The baler according to one of the preceding claims, **characterized in that** a further sensor device is disposed in the inlet region (30) of the antechamber (22) in order to detect the fill level.

8. The baler according to one of the preceding claims, **characterized in that** an actuation of the at least one actuator (64) configured as a hydraulic cylinder (66) is based on a control signal generated by a control device (24).

9. The baler according to one of the preceding claims, **characterized in that** the retaining assembly (58) and/or the retaining means (60) can be changed over into a retaining position and/or inoperative position as a function of at least one parameter of the harvested material which can be pre-set, in particular moisture, harvested material length and/or quantity of harvested material, in particular in the antechamber (22).

10. The baler according to one of the preceding claims, **characterized in that** a ledge (92) is formed on the ceiling side of the antechamber (22) in the discharge region (32) and is disposed between the retaining assembly (58) and the baling channel (12).

11. A method for operating a baler (10), comprising a bale chamber (12) in which a baler piston (14) is moved in oscillation, and an antechamber (22) with an inlet region (30) into which harvested material (20) enters from a pickup device (18) and a discharge region (32) which discharges into the bale chamber (12), wherein a packer (16) is changed over between a collecting stroke movement which compacts harvested material (20) in the antechamber (22) and a filling stroke movement which transfers the harvested material (20) from the antechamber (22) into the downstream bale chamber (12), wherein the antechamber (22) is associated with a retaining assembly (58) which is configured so as to be capable of pivoting into it, wherein the retaining assembly (58) has at least one retaining means (60) which can be pivoted into the antechamber (22), wherein the retaining means (60) has at least one sensor device (84) for determining the fill level of the antechamber (22), wherein the retaining assembly (58) and/or the at least one retaining means (60) as well as the packer (16) in particular is actuated and/or pivoted as a function of a control signal which is generated by the at least one sensor device (84) as a function of the fill level, **characterized in that** the retaining means (60) has a projection (72) in the form of a rocker arm (74) which is disposed on a shank (70) of the retaining means (60) so as to be capable of tilting, wherein the rocker arm (74) has a first end (78) which faces the antechamber (22) and a second end (80) which is opposite to the first end, wherein the rocker arm (74) is connected to the shank (70) between the ends (78, 80) so as to be capable of tilting and is connected at its second end (80) to the sensor device (84) and the sensor device (84) has at least one spring (86) which in particular opposes a tilting movement, a plunger (88) and a sensor element (90), wherein the plunger (88) is mounted on the second end (80) and is disposed at a distance from the sensor element (90) when the rocker arm (74) is in a position which is not tilted, wherein the control signal is generated by the sensor element (90) upon contact with the plunger (88).

12. The method according to claim 11, **characterized in that** the retaining assembly (58) and/or the at least one retaining means (60) is actuated as a function of at least one parameter of the harvested material which can be pre-set, in particular moisture, harvested material length and/or quantity of harvested material.

## Revendications

1. Presse à balles, comprenant une chambre de pressage (12), dans laquelle un piston de pressage (14) est déplaçable de façon oscillante, et comprenant une chambre de précompression (22) avec une zone d'entrée (30), dans laquelle entre du produit récolté (20) ramassé par un dispositif de ramassage (18), et avec une zone de sortie (32), qui débouche dans la chambre de pressage (12), dans la chambre de précompression (22) un ameneur (16) étant commutable entre un mouvement linaire d'accumulation, compactant du produit récolté (20) dans la chambre de précompression (22), et un mouvement linéaire de remplissage, transférant le produit récolté (20) de la chambre de précompression (22) à la chambre de pressage (12) disposée à sa suite, ainsi qu'avec au moins un agencement de retenue (58) conçu de manière pivotante dans la chambre de précompression (22), l'agencement de retenue (58) comportant au moins un moyen de retenue (60) apte à pivoter dans la chambre de précompression (22), le moyen de retenue (60) comportant au moins un équipement de capteur (84) pour déterminer le niveau de remplissage de la chambre de précompression (22), **caractérisée en ce que** le moyen de retenue (60) comporte une saillie (72) en forme de levier basculant (74) disposée de manière basculante sur un segment (70) du moyen de retenue (60), le levier basculant (74) comportant une première extrémité (78) tournée vers la chambre de précompression (22) et une seconde extrémité (80) située à l'opposé de la première, le levier basculant (74) étant relié de manière basculante au segment (70) entre les extrémités (78, 80) et étant relié à sa seconde extrémité (80) à l'équipement de capteur (84), et l'équipement de capteur (84) comportant au moins un ressort (86) en particulier agissant à l'encontre d'un mouvement de basculement, un poussoir (88) et un élément de capteur (90), le poussoir (88) étant monté sur la seconde extrémité (80) et étant disposé, dans une position non basculée du levier basculant (74), à distance de l'élément de capteur (90).

2. Presse à balles selon la revendication 1, **caractérisée en ce que** l'agencement de retenue (58) et/ou le au moins un moyen de retenue (60) avec l'équipement de capteur (84) est disposé dans la zone de sortie (32) de la chambre de précompression (22).

3. Presse à balles selon la revendication 1 ou 2, **caractérisée en ce que** l'agencement de retenue (58) et/ou le moyen de retenue (60) comporte une saillie (72) en forme de râteau, de crochet ou de griffe, laquelle est disposée de manière pivotante autour d'un axe (98) sur un côté du fond (24) de la chambre de précompression (22) situé à l'opposé de la chambre de précompression (22).

4. Presse à balles selon une des revendications précédentes, **caractérisée en ce que** pour l'actionnement de l'agencement de retenue (58) et/ou du moyen de retenue (60) est prévu au moins un actionneur (64).

5. Presse à balles selon la revendication 4, **caractérisée en ce que** le au moins un actionneur (64) est conformé en vérin hydraulique (66) et/ou en élément élastique (68) qui est agencé pour le transfert de l'agencement de retenue (58) et/ou du moyen de retenue (60) dans la position de retenue et/ou position de repos.

6. Presse à balles selon une des revendications précédentes, **caractérisée en ce que** l'actionnement du au moins un actionneur (64) repose sur un signal fourni par le au moins un équipement de capteur (84).

7. Presse à balles selon une des revendications précédentes, **caractérisée en ce que** dans la zone d'entrée (30) de la chambre de précompression (22) est disposé un autre équipement de capteur pour la détection du niveau de remplissage.

8. Presse à balles selon une des revendications précédentes, **caractérisée en ce qu'**un actionnement du au moins un actionneur (64) conformé en vérin hydraulique (66) repose sur un signal de commande généré par un dispositif de commande (24)

9. Presse à balles selon une des revendications précédentes, **caractérisée en ce que** l'agencement de retenue (58) et/ou le moyen de retenue (60) est déplaçable dans une position de retenue et/ou position de repos en fonction d'au moins un paramètre prescriptible de produit récolté, en particulier humidité, longueur de produit récolté et/ou quantité de produit récolté, en particulier dans la chambre de précompression (22).

10. Presse à balles selon une des revendications précédentes, **caractérisée en ce que** dans la chambre de précompression (22), dans la zone de sortie (32), est ménagé côté plafond un gradin (92) qui est disposé entre l'agencement de retenue (58) et le canal de pressage (12).

11. Procédé de fonctionnement d'une presse à balles (10), incluant une chambre de pressage (12), dans laquelle un piston de pressage (14) est déplacé de manière oscillante, et une chambre de précompression (22) avec une zone d'entrée (30), dans laquelle entre du produit récolté (20) ramassé par un dispositif de ramassage (18), et avec une zone de sortie (32), qui débouche dans la chambre de pressage (12), dans la chambre de précompression (22) un ameneur (16) étant commutable entre un mouvement linaire d'accumulation, compactant du produit récolté (20) dans la chambre de précompression (22), et un mouvement linéaire de remplissage, transférant le produit récolté (20) de la chambre de précompression (22) à la chambre de pressage (12) disposée à sa suite, à la chambre de précompression (22) étant associé un agencement de retenue (58) conçu de manière pivotante, l'agencement de retenue (58) comportant au moins un moyen de retenue (60) apte à pivoter dans la chambre de précompression (22), le moyen de retenue (60) comportant au moins un équipement de capteur (84) pour déterminer le niveau de remplissage de la chambre de précompression (22), l'agencement de retenue (58) et/ou le au moins un moyen de retenue (60), ainsi en particulier que l'ameneur (16), étant actionné et/ou pivoté en fonction d'un signal de commande qui est généré par le au moins un équipement de capteur (84) en fonction du niveau de remplissage, **caractérisé en ce que** le moyen de retenue (60) comporte une saillie (72) en forme de levier basculant (74) disposée de manière basculante sur un segment (70) du moyen de retenue (60), le levier basculant (74) comportant une première extrémité (78) tournée vers la chambre de précompression (22) et une seconde extrémité (80) située à l'opposé de la première, le levier basculant (74) étant relié de manière basculante au segment (70) entre les extrémités (78, 80) et étant relié à sa seconde extrémité (80) à l'équipement de capteur (84), et l'équipement de capteur (84) comportant au moins un ressort (86) en particulier agissant à l'encontre d'un mouvement de basculement, un poussoir (88) et un élément de capteur (90), le poussoir (88) étant monté sur la seconde extrémité (80) et étant disposé, dans une position non basculée du levier basculant (74), à distance de l'élément de capteur (90), le signal de commande étant généré par l'élément de capteur (90) en cas de contact avec le poussoir (88).

12. Procédé selon la revendication 11, **caractérisé en ce que** l'agencement de retenue (58) et/ou le au moins un moyen de retenue (60) est actionné en fonction d'au moins un paramètre prescriptible de produit récolté, en particulier humidité, longueur de produit récolté et/ou quantité de produit récolté.
